# EUROPEAN PATENT SPECIFICATION

(11) **EP 2 562 865 B1**
(45) Date of publication and mention of the grant of the patent: **27.12.2017**
(21) Application number: 11771471.7
(22) Date of filing: 16.02.2011
(51) Int. Cl.: H01M 10/0565, H01M 10/0525, H01G 11/56, H01M 2/36

(54) **PREPARING METHOD FOR GEL ELECTROLYTE BATTERY**
HERSTELLUNGSVERFAHREN FÜR GELELEKTROLYTBATTERIE
PROCÉDÉ DE PRÉPARATION D'UN ACCUMULATEUR À ÉLECTROLYTE GEL

(30) Priority: 20.04.2010 CN 201010152084
(43) Date of publication of application: 27.02.2013
(73) Proprietor: Shenzhen Capchem Technology Co. Ltd., Shenzhen City, Guangdong Province, 51811 (CN)
(72) Inventor: YUAN, Fang, Jiangsu 215123 (CN); WU, Xiaodong, Jiangsu 215123 (CN); PAYNE, Martin William, Independence, OH 44131 (US)
(74) Representative: de Arpe Fernandez, Manuel
(86) International application number: PCT/CN2011/000241
(87) International publication number: WO 2011/131018

(56) References cited:
- EP-A2- 0 667 361
- WO-A1-2008/075867
- CN-A- 1 529 384
- CN-A- 1 529 384
- CN-A- 101 517 811
- CN-A- 101 807 717
- US-A1- 2002 112 984
- US-A1- 2010 040 954
- US-B1- 7 172 834
- ZHANG ET AL: "A review on electrolyte additives for lithium-ion batteries", JOURNAL OF POWER SOURCES, ELSEVIER SA, CH, vol. 162, no. 2, 22 November 2006 (2006-11-22), pages 1379-1394, XP027938606, ISSN: 0378-7753 [retrieved on 2006-11-22]
- Anonymous: "Azobisisobutyronitrile - Wikipedia, the free encyclopedia", , 13 November 2009 (2009-11-13), XP055299218, Retrieved from the Internet: URL:https://en.wikipedia.org/w/index.php?t itle=Azobisisobutyronitrile&oldid=32561211 4 [retrieved on 2016-09-01]

## Description

### Technical Field

The application relates to a preparing method of a battery using a gel electrolyte

### Background

Due to higher volumetric specific energy, gravimetric specific energy and excellent environment protection, the lithium ion batteries gradually replace lead-acid batteries, Ni-Cd and MH-Ni batteries and are widely applied to portable electronic equipment, such as mobile phones, notebook computers and the like and have good application prospect. The lithium ion batteries can be divided into liquid state lithium ion batteries and polymer lithium ion batteries according to different electrolytes used by the lithium ion batteries. The liquid state lithium ion battery has excellent high charge-discharge rate and low temperature property, but has the disadvantages that liquid electrolyte is likely to leak, thereby damaging the safety of the battery; in addition, because the outer package of the liquid state lithium ion battery is an aluminum shell or a steel shell, the shape of the battery is limited. Instead of an electrolyte solution, a polymer electrolyte membrane is adopted in the polymer lithium ion battery, the polymer lithium ion battery is packaged by using a composite aluminum plastic film so that the battery can be made into any shape; many micropores are generated by adding plasticizers, pole pieces and diaphragms, compounding and then extracting, and the electrolyte is absorbed through the micropores. However, the method is complex in process and leads to environmental pollution.

A gel electrolyte and a preparing method thereof are provided in Chinese Patents Application No. 03158361.X titled "Lithium Ion Battery Gel Electrolyte Formulation and Methods for Preparing Gel Electrolytic Using Same" (published as CN 1529384 A) and Chinese Patent Application No. 200610122573.7 titled "A Method for Preparing Polymer Gel Electrolyte". Although the gel electrolyte that can be obtained by using these methods has higher ionic conductivity, electrical property is still poor, and initial voltage and discharge capacity are low.

### Description of the invention

Technical problems to be solved by the invention are: aiming at the defects of the prior art, the invention provides a gel electrolyte, a preparing method thereof, a battery using the gel electrolyte and a preparing method thereof. The gel electrolyte battery has higher initial voltage and discharge capacity, lower internal resistance and superior electrical property, no-leakage of liquid is ensured, and the safety property of the battery is improved.

The technical schemes of solving the technical problems are as follow:

A gel electrolyte comprises a non-aqueous solvent containing lithium salts and a gel constituent, wherein the gel constituent comprises the following substances: a polyethylene glycol compound with unsaturated double bonds, an ester monomer with an unsaturated double bond, a silane coupling agent and a thermal initiator (as disclosed in CN 1529384 A); in the present invention the lithium salts in the non-aqueous solvent containing lithium salts are mixed salts; the mixed salts consist of a main salt and an auxiliary salt, wherein the mass percentage of the main salt is greater than or equal to 70 % and the mass percentage of the auxiliary salt is less than or equal to 30 % ; the main salt of the mixed salts is at least one of the following substances: LiPF₆, LiBF₄, LiClO₄, LiI, LiNO₃, LiCF₃SO₃, LiN(CF₃SO₂)₂, LiN(CF₂CF₃SO₂)₂; and the auxiliary salt of the mixed salts is at least one of the following substances: LiB(C₂O₄)₂ or LiBF₂C₂O₄. Such auxiliary salts are disclosed in Zhang et al., "A review on electrolyte additives for lithium-ion batteries", J. Power Sources 162 (2), 1379-1394 (2006). A secondary lithium battery adopts mixed salts, and a primary lithium battery adopts a single salt. The present invention is directed at a method of preparing a secondary battery, as detailed in claim 1. A preparing method of the gel electrolyte comprises the steps of: firstly, preparing the non-aqueous solvent containing lithium salts and dividing the prepared non-aqueous solvent containing lithium salts into two parts; then, adding the initiator to one part and stirring to be uniform to obtain a gel electrolyte part A for a lithium battery; meanwhile, adding monomers and a coupling agent to the other part; and stirring to be uniform to obtain a gel electrolyte part B for a lithium battery. The obtained gel electrolyte is in a bi-part package, wherein the ratio of the weight percents of the part A and part B is 1:1.

A gel electrolyte battery comprises the above gel electrolyte.

A preparing method of the gel electrolyte battery includes firstly mixing the gel electrolyte part A and the gel electrolyte part B in the weight ratio of 1:1; stirring to obtain an uniform liquid, wherein the viscosity of the liquid is similar to that of the non-aqueous solvent containing lithium salts; injecting the stirred uniform liquid into a dried battery and allowing the battery to stand for 16 to 24 hours so as to sufficiently distribute the gel electrolyte inside the battery, and finally in-situ thermally polymerizing the gel electrolyte to obtain the gel electrolyte battery. An embodiment of the present invention is as follows :

The weight percent contents of the components in the gel electrolyte are as follows: 0.5-5% of the polyethylene glycol compounds with unsaturated double bonds, 0-10% of the ester monomer with unsaturated double bond, 0-5 % of the silane coupling agent, 0.01-2 % of the thermal initiators; 80-98% of the non-aqueous solvent containing lithium salts, and the concentration of the lithium salts in the non-aqueous solvent containing lithium salts is 0.5-1.5M.

The polyethylene glycol compound with unsaturated double bonds is a polyethylene glycol di-alkylacrylate compound, which is represented by the following formula: CH₂=C(R)COO(CH₂CH₂O)ₙ-COC(R)=CH₂, wherein n=1-12, and R represents CH₃ or C₂H₅. The weight percent content of the polyethylene glycol compound with unsaturated double bonds is 0.8-3.5%.

The ester monomer with an unsaturated double bond is selected from at least one of the following substances: alkyl (alpha-meth)acrylate, alkyl acrylate. The weight percent content of the ester monomer with an unsaturated double bond is 0.3-8 %.

The silane coupling agent is gamma-(methacryloxy)propyltrioxysilane represented by the following formula: CH₂=C(R)-COO(CH₂)n-Si-(OCH₃)₃, wherein n=1-3, and R represents H or CH₃. The weight percent content of the silane coupling agent is 0.5-3 %.

The thermal initiator is selected from at least one of the following substances: azodiisobutyronitrile, dodecanoyl peroxide. The weight percent content of the thermal initiator is 0.02-1.5 %.

The non-aqueous solvent in the non-aqueous solvent containing lithium salt is selected from at least one of the following substances: ethylene carbonate, propylene carbonate, butylene carbonate, 1,2-dimethyl ethylene carbonate, ethyl butyl carbonate; methyl butyl carbonate, dibutyl carbonate, diethyl carbonate, dimethyl carbonate, trifluoromethyl ethylene carbonate, di-n-propyl carbonate, diisopropyl carbonate, methyl ethyl carbonate, ethyl propyl carbonate, ethyl isopropyl carbonate, methyl propyl carbonate, dimethoxyethane, diethoxyethane, tetrahydrofuran, 2-methyltetrahydrofuran, diethylene glycol dimethyl ether, triethylene glycol dimethyl ether, tetraethylene glycol dimethyl ether, 1,3-dioxolane, dimethyl sulfoxide, sulfolane, 4-methyl-1,3-butyrolactone, gamma-butyrolactone, methyl formate, ethyl formate, methyl acetate, ethyl acetate, methyl propionate, ethyl propionate, methyl butyrate, ethyl butyrate, vinylene carbonate, propane sultone, ethylene sulfite. The concentration of the lithium salts in the non-aqueous solvent containing lithium salt is 0.8M-1.35M. The weight percent content of the non-aqueous solvent containing lithium salt is 88-98 wt%. The lithium salt is selected from at least one of the following substances: LiPF₆, LiBF₄, LiClO₄, wherein the former two (LiPF6 and LiBF4) are common lithium salts for secondary lithium batteries, and the last one (LiClO4) is a common lithium salt for primary lithium batteries.

The in-situ thermal polymerization can be performed in the lithium battery in one step, the polymerization temperature is 50-70°C, and the polymerization time is 16-48h. The in-situ thermal polymerization can be performed in the lithium battery in several steps employing two-stage temperature profile, namely initiating at high temperature and polymerizing at low temperature, wherein the initiation temperature is 60-90°C, and the polymerization temperature is 40-70°C. The in-situ thermal polymerization can be performed in the lithium battery in several steps employing two-stage temperature profile, namely initiating at high temperature and polymerizing at low temperature, wherein the initiation time is 45-90min, and the polymerization time is 8-48h.

The invention has the following advantages: LiB(C₂O₄)₂ or LiBF₂C₂O₄ is introduced as a mixed salt to the gel electrolyte components of the invention, such that the comprehensive electrical property of the electrolyte can be improved and the high and low temperature properties of the battery can be improved. As LiB(C₂O₄)₂ and LiBF₂C₂O₄ have higher heat stability and better cycle property compared with LiPF₆, the property of the secondary lithium battery under high temperature working conditions can be improved.

In the preparing method of the gel electrolyte of the invention, the gel electrolyte is packed into bi-part package. Compared with the single-part package, the bi-part package has the advantages of prolonging the storage life of the gel electrolyte and avoiding failure of the gel electrolyte caused by thermal polymerization of the gel electrolyte in transit.

Compared with the common liquid state electrolyte lithium battery, the present invention has higher initial voltage and discharge capacity, lower internal resistance and superior electrical property. Under the same test conditions, compared with the common liquid state electrolyte lithium battery, the gel polymer battery has slightly higher internal resistance and an initial capacity about 4% lower than that of the common liquid state electrolyte lithium battery, however the initial capacity reaches the design capacity 650mAh of the battery; after the battery is repeatedly charged and discharged 300 times, the capacity retention rate is 90%, which satisfies the property requirements of the lithium cobaltate secondary battery. Compared with the prior art, the invention adopts a simple preparing method of the gel electrolyte, the safety property of the gel electrolyte battery is improved and good electrochemical property of the lithium battery is guaranteed without changing the preparing process of the gel electrolyte battery or controlling the preparing cost of the gel electrolyte battery. Further details regarding the properties of the gel electrolyte battery of the invention can be seen in Tables 1 and 2.

### Reference examples useful for understanding, but not forming part of, the invention

### Example 1

The weight percent contents of the components in the gel electrolyte are :
triethylene glycol dimethacrylate: 1.2 wt%
methyl methacrylate: 8 wt%
gamma-(methacryloxy)propyltrioxysilane: 1.2 wt%
azodiisobutyronitrile: 0. 06 wt%
azodiisobutyronitrile: 0. 06 wt%
non-aqueous solvent containing lithium salts: 0.9M LiPF₆ and 0.1M LiB(C₂O₄)₂, wherein EC/DMC is 3:7, and the weight percentage is 89.54%.

A non-aqueous solvent containing lithium salts is pre-prepared and is divided into two parts; then an initiator azodiisobutyronitrile is added to one part and is stirred to be uniform to obtain a gel electrolyte part A for a lithium battery; meanwhile, the monomers and a coupling agent are added to the other part and are stirred to be uniform to obtain a gel electrolyte part B for a lithium battery; the gel electrolyte part A and the gel electrolyte part B are mixed in the weight ratio of 1:1, wherein mixed liquid is a colorless or light-yellow transparent liquid; after being stirred to be uniform, the mixed liquid is injected into an aluminum-plastic bag for soft bag batteries and the aluminum-plastic bag is sealed. Then an in-situ thermal polymerization is performed; the polymerization temperature at the first section is 85°C, the polymerization time is for 20min; the polymerization temperature at the second section is 60°C, the polymerization time is for 16h; a flowing mixed electrolyte forms a stable gel electrolyte. The steps of preparing mixed liquid and injecting liquid are performed in a glove box under the protection of nitrogen, and the in-situ thermal polymerization is performed in a common oven.

Electrochemical properties and physical properties of the formed gel polymer lithium batteries are assessed:
(1) A piece of small (round) gel electrolyte is tightly pressed between two stainless steel inert electrodes to make a simple battery. The frequency response of alternating-current impedance of the simple battery is measured. The analysis on the frequency response shows that the ionic conductivity of the gel electrolyte of example 1 reaches 6.7×10⁻³S/cm.
(2) The aluminum-plastic bag is opened, the gel electrolyte is taken out and placed between two pieces of sheet glass and is pressed without flowing out liquid state electrolyte.

### Example 2

Each component of the gel electrolyte has following weight percentage:
triethylene glycol dimethacrylate: 3 wt%,
methyl methacrylate: 1 wt%
gamma-(methacryloxy)propyltrioxysilane: 2.5 wt%
Azodiisobutyronitrile: 0.06 wt%
non-aqueous solvent containing lithium salts: 1.0M LiClO₄, wherein PC/EMC/DEC is 4:3:3, and the weight percentage is 93.44%. As the battery is the primary battery, the mixed salt is not needed.

The non-aqueous solvent containing lithium salts is pre-prepared and is divided into two parts. Then an initiator of azodiisobutyronitrile is added to one part and stirred to be uniform to obtain a gel electrolyte part A for a lithium battery; meanwhile, the monomers and a coupling agent are added to the other part and stirred to be uniform to obtain a gel electrolyte part B for a lithium battery; the gel electrolyte part A and the gel electrolyte part B are mixed in the weight ratio of 1:1, wherein mixed liquid is colorless or light-yellow transparent liquid; after being stirred to be uniform, the mixed liquid is injected into a lithium/manganese dioxide primary battery to be allowed standing for 12-16h so as to sufficiently distribute the gel electrolyte inside the battery. Then an in-situ thermal polymerization is performed; the polymerization temperature at the first section is 85°C, the polymerization time is 45-60min; the polymerization temperature at the second section is 45°C, the polymerization time is 16h; and a flowing mixed electrolyte forms a stable gel electrolyte. The steps of preparing mixed liquid and injecting liquid are performed in a glove box under the protection of nitrogen, and the in-situ thermal polymerization is performed in a common oven.

Electrochemical properties and physical properties of the formed gel polymer lithium batteries are assessed:
(1) The electrochemical properties of the lithium/manganese dioxide soft bag battery are shown in table 1:

**Table 1**

| Control batteries (common liquid state electrolyte lithium batteries) | | | | |
|---|---|---|---|---|
| Initial voltage (V) | internal resistance (Ω) | discharge current(mA) | Discharge capacity(mAh) | discharge temperature(°C) |
| 3.146 | 18.6 | 1 | 9.74 | 20 |
| 3.139 | 18.1 | 0.65 | 10.08 | 20 |
| 3.140 | 17.6 | 0.35 | 10.64 | 20 |
| 3.141 | 16.4 | 0.35 | 0.047 | -20 |

| Gel polymer lithium battery | | | | |
|---|---|---|---|---|
| 3.227 | 13.4 | 1 | 26.61 | 20 |
| 3.235 | 13.8 | 0.65 | 28.82 | 20 |
| 3.257 | 13.5 | 0.35 | 25.89 | 20 |
| 3.244 | 16.4 | 0.35 | 21.25 | -20 |

The experimental data show that, compared with the common liquid state electrolyte lithium batteries, the gel polymer lithium batteries of the invention have higher initial voltage and discharge capacity, lower internal resistance and superior electrical property under the same testing conditions.
(2) The gel polymer lithium batteries are disassembled, and people visually inspect the overflowing of the electrolyte. The result shows that the gel electrolyte formed in example 2 does not flow out and is in a gel state.

### Example 3

Each component of the gel electrolyte has following weight percentage:
triethylene glycol dimethacrylate: 2.3 wt%,
methyl methacrylate: 0.8 wt%
gamma-(methacryloxy)propyltrioxysilane: 1.9 wt%
azodiisobutyronitrile: 0.05 wt%
non-aqueous solvent containing lithium salts: 0.9M LiPF₆ and 0.1M LiB(C₂O₄)₂, wherein EC/PC/EMC/DMC is 20:8:40:32, and the weight percentage is 94.95%.

The non-aqueous solvent containing lithium salts is pre-prepared and is divided into two parts; an initiator azodiisobutyronitrile is added to one part and stirred to be uniform to obtain a gel electrolyte part A for a lithium battery; meanwhile, the monomers and the coupling agent are added to the other part and stirred to be uniform to obtain a gel electrolyte part B for a lithium battery; the gel electrolyte part A and the gel electrolyte part B are mixed in the weight ratio of 1:1, wherein mixed liquid is a colorless or light-yellow transparent liquid; after being stirred to be uniform, the mixed liquid is injected into a lithium iron phosphate secondary battery to be allowed standing for 12-16 h so as to sufficiently distribute the gel electrolyte inside the battery. Then a in-situ thermal polymerization is performed; the polymerization temperature is 60°C, the polymerization time is for 8-16h; and a flowing mixed electrolyte forms a stable gel electrolyte. The steps of preparing mixed liquid and injecting liquid are performed in a glove box under the protection of nitrogen, and the in-situ thermal polymerization is performed in a common oven.

Electrochemical properties and physical properties of the formed gel polymer lithium batteries are assessed:
(1) The electrochemical properties of 1,000mAh lithium iron phosphate cylinder aluminum shell batteries are shown in table 2:

| Control batteries (common liquid state electrolyte lithium batteries)85°C @4hours | | | |
|---|---|---|---|
| Initial capacity (mAh), | stored capacity retention rate (%) | stored capacity recovery rate (%) | stored battery internal resistance change rate (%) |
| 1011 | 105.61 | 108.51 | 16.95 |
| 1019 | 105.10 | 107.36 | 17.65 |

| Gel polymer batteries (single salt) | | | |
|---|---|---|---|
| 1025 | 88.39 | 94.05 | 46.15 |
| 1019 | 89.30 | 94.70 | 47.85 |

| Gel polymer batteries (composite salt) | | | |
|---|---|---|---|
| 1055 | 95.92 | 98.96 | 30.10 |
| 1077 | 95.54 | 97.96 | 29.17 |

The experimental data show that, compared with the common liquid state electrolyte lithium battery, the gel polymer battery has slightly higher initial capacity under the same test conditions. The capacity retention rate and the capacity recovery rate of the gel polymer battery subjected to high temperature storage are slightly lower than the common liquid state electrolyte lithium battery and are higher than 85%, which satisfies the use requirement of the batteries. The properties of the gel polymer battery of the composite salt are superior to those of the gel polymer battery of the single salt; after the composite salt is utilized, the electrical property of the gel polymer battery is greatly improved. That is to say, the gel polymer electrolyte formed in example 3 can meet the requirement of electrochemical properties of a lithium iron phosphate secondary battery, and guarantee no leakage at the same time and improve the safety property of the battery.
(2) The gel polymer lithium batteries are disassembled, and people visually inspect the overflowing condition of the electrolyte. The result shows that the gel electrolyte formed in example 3 does not flow out and is in a gel state.

## Claims

1. A preparing method of a battery using a gel electrolyte comprising a non-aqueous solvent containing
lithium salts and a gel constituent,
wherein the gel constituent comprises the following substances:
a polyethylene glycol compound with unsaturated double bonds,
an ester monomer with an unsaturated double bond,
a silane coupling agent and
a thermal initiator; wherein
a) the lithium salts in the non-aqueous solvent containing lithium salts are mixed salts, in which the mixed salts consist of
- a main salt and
- an auxiliary salt,
wherein the weight percentage of the main salt is greater than or equal to 70 % and the weight percentage of the auxiliary salt is less than or equal to 30 %,
the main salt of the mixed salts is at least one of the following substances: LiPF₆, LiBF₄, LiClO₄, LiI, LiNO₃, LiCF₃SO₃, LiN(CF₃SO₂)₂, LiN(CF₂CF₃SO₂)₂, and the auxiliary salt of the mixed salts is at least one of the following substances: LiB(C₂O₄)₂ or LiBF₂C₂O₄,
b) the silane coupling agent is gamma-(methacryloxy)propyltrioxysilane represented by the following formula: CH₂=C(R)-COO(CH₂)n-Si-(OCH₃)₃, wherein n=1-3, and R represents H or CH₃, and the weight percentage of the silane coupling agent is 0.5-3 wt. %; and
c) the thermal initiator is selected from at least one of the following substances: azodiisobutyronitrile and dodecanoyl peroxide, wherein the method is **characterized in that**:
firstly, preparing the non-aqueous solvent containing lithium salts and dividing it into two parts,
then adding the initiator to one part and stirring to be uniform to obtain a gel electrolyte part A for a lithium battery,
meanwhile, adding the monomers and the coupling agent to the other part and stirring to be uniform to obtain a gel electrolyte part B for a lithium battery,
mixing the gel electrolyte part A and the gel electrolyte part B in the weight ratio of 1:1, stirring to obtain an uniform liquid, wherein the viscosity of the liquid is similar to that of the non-aqueous solvent containing lithium salt,
then injecting the stirred uniform liquid into a dried battery and allowing the battery to stand for 16 to 24 hours so as to sufficiently distribute the gel electrolyte inside the battery,
and finally, obtaining the gel electrolyte battery via in-situ thermal polymerization.

2. The preparing method of the battery using a gel electrolyte of claim 1, **characterized in that** the in-situ thermal polymerization is performed in the lithium battery in one step, the polymerization temperature is 50-70°C, and the polymerization time is 16-48h.

3. The preparing method of the battery using a gel electrolyte of claim 1, **characterized in that** the in-situ thermal polymerization is performed in the lithium battery in several steps employing two-stage temperature profile, namely being initiated at high temperature and polymerizing at low temperature, wherein the initiation temperature is 60-90 °C, and the polymerization temperature is 40-70 °C.

4. The preparing method of the battery using a gel electrolyte of claim 1, **characterized in that** the in-situ thermal polymerization is performed in the lithium battery in several steps employing two-stage temperature profile, namely being initiated at high temperature and polymerizing at low temperature, wherein the initiation time is 45-90 min, and the polymerization time is 8-48 h.

## Patentansprüche

1. Eine Methode für die Herstellung einer Batterie mit einem Elektrolytgel, die ein nicht wässriges Lösemittel umfasst, und Folgendes enthält:
Lithiumsalze und eine Gelkomponente,
wobei die Gelkomponente folgende Substanzen umfasst:
eine Zusammensetzung aus Polyethylen-Glycol mit ungesättigten Doppelbindungen,
ein Estermonomer mit einer ungesättigten Doppelbindung,
einen Silan-Haftvermittler und
einen thermischer Initiator;
wobei
a) die Lithiumsalze in dem nicht wässrigen Lösemittel mit einem Lithiumsalzgehalt gemischte Salze sind, die sich wie folgt zusammensetzen
- ein Hauptsalz und
- ein Hilfssalz,
wobei der Gewichtsprozentanteil des Hauptsalzes höher ist als oder gleich 70% und der Gewichtsprozentanteil des Hilfssalzes weniger ist als oder gleich 30%, das Hauptsalz der Salzmischung mindestens eine der folgenden Substanzen ist: LiPF₆, LiBF₄, LiClO₄, Lil, LiNO₃, LiCF₃SO₃, LiN(CF₃SO₂)₂, LiN(CF₂CF₃SO₂)₂, und das Hilfssalz der Salzmischung mindestens eine der folgenden Substanzen ist: LiB(C₂O₄)₂ oder LiBF₂C₂O₄,
b) der Silan-Haftvermittler ist Gamma-(Methacryloxy)Propyltrioxysilan dargestellt mit folgender Formel: CH₂=C(R)-COO(CH₂)n-Si-(OCH₃)₃, in der n=1-3 ist und R H oder CH₃ bedeutet, und der Gewichtsprozentsatz des Silan-Haftvermittlers 0,53 % beträgt; und
c) der thermische Initiator ausgewählt ist von mindestens einer der folgenden Substanzen Azodiisobutyronitril und Dodecanoyl-Peroxid,
wobei die Methode **dadurch gekennzeichnet ist, dass** an erster Stelle das nicht wässrige Lösemittel mit Lithiumsalzgehalt zubereitet wird, um ein Gelelektrolyt als Teil A für eine Lithiumbatterie zu erhalten, zwischenzeitlich die Monomere und der Haftvermittler zu dem anderen Teil unter Umrühren hinzugefügt werden, um als Teil B einer Lithiumbatterie ein einheitliches Elektrolytgel zu erhalten,
Mischung des Elektrolytgels von Teil A und des Elektrolytgels von Teil B in einem Gewichtsverhältnis von 1:1, Umrühren, um eine einheitliche Flüssigkeit zu erhalten mit einer Viskosität der Flüssigkeit, die ähnlich ist wie die des nicht wässrigen Lösemittels, das das Lithiumsalz enthält,
danach Einspritzen der gerührten, einheitlichen Flüssigkeit in eine getrocknete Batterie, wonach die Batterie 16 bis 24 Stunden ruhen muss, um das Elektrolytgel ausreichend in der Batterie zu verteilen,
und abschliessend, Herstellung der Elektrolytgelbatterie über eine thermische Polymerisation vor Ort.

2. Die Herstellungsmethode für die Batterie unter Verwendung eines Elektrolytgels gemäss Anspruch 1 **dadurch gekennzeichnet, dass** die thermische Polymerisation vor Ort in der Lithiumbatterie in einem einzigen Schritt erfolgt, wobei die Temperatur der Polymerisation zwischen 50 und 70º C liegt und die Polymerisationszeit 16-48 Stunden beträgt.

3. Die Herstellungsmethode der Batterie unter Verwendung eines Elektrolytgels gemäss Anspruch 1 **dadurch gekennzeichnet, dass** die thermische Polymerisation vor Ort in der Lithiumbatterie in mehreren Schritten durchgeführt wird, wobei ein zweistufiges Temperaturprofil zur Anwendung kommt, d. h. die Initiation bei einer hohen Temperatur und die Polymerisation bei einer niedrigen Temperatur, wobei die Initiationstemperatur 60-90º C und die Polymerisationstemperatur 40-70º C beträgt.

4. Die Herstellungsmethode der Batterie unter Verwendung eines Elektrolytgels gemäss Anspruch 1 **dadurch gekennzeichnet, dass** die thermische Polimerisation vor Ort in der Lithiumbatterie in mehreren Schritten erfolgt, wobei ein zweistufiges Temperaturprofil zur Anwendung kommt, d.h. mit einer Initiation bei einer Hohen Temperatur und mit einer Polymerisation bei einer niedrigen Temperatur, wobei de Initiationszeit 45-90 Minuten und die Polymerisationszeit 8-48 Stunden beträgt.

## Revendications

1. Méthode de préparation d'une batterie en utilisant un électrolyte gélifié comprenant un solvant non aqueux qui contient
des sels de lithium et un composant de gel,
où ledit composant de gel contenant les substances suivantes:
un composé de polyéthylène glycol à doubles liaisons non saturées,
un monomère d'ester à doubles liaisons non saturées,
un agent de couplage en silane et
un amorceur thermique ;
dont les caractéristiques sont comme suit :
a) les sels de lithium contenues dans le solvant non aqueux sont des sels mixtes composés de:
- sel principal, et
- sel auxiliaire, où le pourcentage pondéral du sel principal est au-dessus ou égal à 70%, et le pourcentage pondéral du sel auxiliaire est au-dessous ou égal à 30%,
le sel principal des sels mixtes contient au moins l'une des substances suivantes: LiPF₆, LiBF₄, LiClO₄ Lil, LiNO₃, LiCF₃SO₃, LiN(CF₃SO₂)₂. LiN(CF₂CF₃SO₂); et le sel auxiliaire des sels mixtes contient au moins l'une des substances suivantes: LiB(C₂O₄)₂ ou LiBF ₂C₂O₄.
b) l'agent de couplage en silane est gamma-(méthacryloxy)propyltrioxysilane, représenté par la formule suivante: CH₂=C(R)-COO(CH₂)n-Si-(OCH₃)₃, où n=1-3, et R représente H ou CH₃, et le pourcentage pondéral de l'agent de couplage en silane est 0,5-3%; et
c) l'amorceur thermique est sélectionné parmi l'une au moins des substances suivantes: azodiisobutyronitrile et peroxyde de dodécanoyle, où la méthode est **caractérisée en ce que**:
premièrement, il faut préparer le solvant non aqueux contenant des sels de lithium et le diviser en deux parts,
ensuite, ajouter l'amorceur à une part et le remuer pour le rendre uniforme et obtenir un électrolyte gélifié - Part A pour une batterie au lithium,
entre-temps, ajouter les monomères et l'agent de couplage à l'autre part et mélanger pour le rendre uniforme et obtenir un électrolyte gélifié- Part B pour une batterie au lithium, mélanger la part A de l'électrolyte gélifié et la part B de l'électrolyte gélifié selon la proportion pondérale 1:1, le remuer pour obtenir un liquide uniforme, où la viscosité du liquide soit similaire à celle du solvant non aqueux contenant le sel de lithium, ensuite, injecter le liquide uniforme qui a été remué dans une batterie séchée et laisser la batterie pendant un temps entre 16 et 24 heures, pour distribuer suffisamment l'électrolyte gélifié à l'intérieur de la batterie,
et, finalement, obtenir la batterie à l'électrolyte gélifié à travers la polymérisation thermique sur place.

2. La méthode de préparation de la batterie en utilisant un électrolyte gélifié de la revendication 1, **caractérisée par le fait que** la polymérisation thermique sur place est effectuée dans la batterie de lithium en une seule phase, la température de polymérisation se situant entre 50-70º C, et le temps de polymérisation entre 16-48 heures.

3. La méthode de préparation de la batterie en utilisant un électrolyte gélifié de la revendication 1, **caractérisée par le fait que** la polymérisation thermique sur place est effectuée dans la batterie de lithium en plusieurs phases en utilisant un profil de température en deux étapes, notamment en commençant à une température élevée et en polymérisant à basse température; la température d'amorçage se situant entre 60-90º C, et la température de polymérisation entre 40-70º C.

4. La méthode de préparation de la batterie en utilisant un électrolyte gélifié de la revendication 1, **caractérisée par le fait que** la polymérisation thermique sur place est effectuée dans la batterie de lithium en plusieurs phases en utilisant un profil de température en deux étapes, notamment en commençant à une température élevée et en polymérisant à basse température; le temps d'amorçage se situant entre 45-90 min et le temps de polymérisation entre 8-48 h.
